**Europäisches Patentamt**

(19) **European Patent Office**

**Office européen des brevets**

(11) Numéro de publication: **0 158 383**
**B1**

(12) ## FASCICULE DE BREVET EUROPEEN

(45) Date de publication du fascicule du brevet:
14.06.89

(51) Int. Cl.⁴: **H 04 N 7/167**

(21) Numéro de dépôt: 85200382.1

(22) Date de dépôt: 14.03.85

(54) Dispositif de déchiffrement et de décodage d'images de télévision codées selon le standard MAC et brouillées par application aux signaux vidéo de permutations circulaires.

(30) Priorité: 16.03.84 FR 8404099

(43) Date de publication de la demande:
16.10.85 Bulletin 85/42

(45) Mention de la délivrance du brevet:
14.06.89 Bulletin 89/24

(84) Etats contractants désignés:
DE FR GB

(56) Documents cités:
WO-A-81/02499
WO-A-83/03942
FR-A- 2 533 099

DOCUMENTS CCIR STUDY GROUPS, période
1982-1986, document 10-11S/106-E, 23 septembre 1983,
pages 1-20; corrigendum 1, pages 1,2; corrigendum 2,
pages 1,2; 10-11S-2, DRAFT NEW REPORT: "Satellite
transmission of multiplexed analogue component
(MAC) television signals"
IEEE TRANSACTIONS ON CONSUMER ELECTRONICS,
vol. CE-29, no. 3, août 1983, pages 403-413, IEEE, New
York, US; W.G. STALLARD: "C-MAC - A high quality
television service for DBS"

(73) Titulaire: **Laboratoires d'Electronique et de Physique
Appliquée L.E.P., 3, Avenue Descartes,
F-94450 Limeil-Brévannes (FR)**

(84) Etats contractants désignés: **FR**

(73) Titulaire: **N.V. Philips' Gloeilampenfabrieken,
Groenewoudseweg 1, NL-5621 BA Eindhoven (NL)**

(84) Etats contractants désignés: **DE GB**

(72) Inventeur: **Arragon, Jean-Pierre Société Civile S.P.I.D.,
209 rue de l'Université, F-75007 Paris (FR)**
Inventeur: **Michel, Jean-Pierre Société Civile S.P.I.D.,
209 rue de l'Université, F-75007 Paris (FR)**

(74) Mandataire: **Landousy, Christian et al, Société Civile
S.P.I.D. 209, Rue de l'Université, F-75007 Paris (FR)**

## Description

La présente invention concerne un nouveau dispositif de déchiffrement et de décodage d'images de télévision transmises selon le procédé de codage MAC et brouillées par application aux signaux vidéo de permutations circulaires.

Le standard dit MAC est un procédé de multiplexage temporel de composantes analogiques décrit dans le rapport 116/81 UDC 621.396.946 «Direct television broadcasts by satellite: desirability of a new transmission standard» par K. Lucas et M. D. Windrow, Independant Broadcasting Authority, Crawley Court, Winchester, Hants, S021-2QA, ainsi que, plus récemment, dans l'article «Television systems for DBS» paru dans la revue «The Radio and Electronic Engineers», vol. 52, n° 7, juillet 82, p. 311 et suivantes. Ce standard est recommandé par l'UER dans le document SPB 284, proposé pour normalisation et spécification au CCIR.

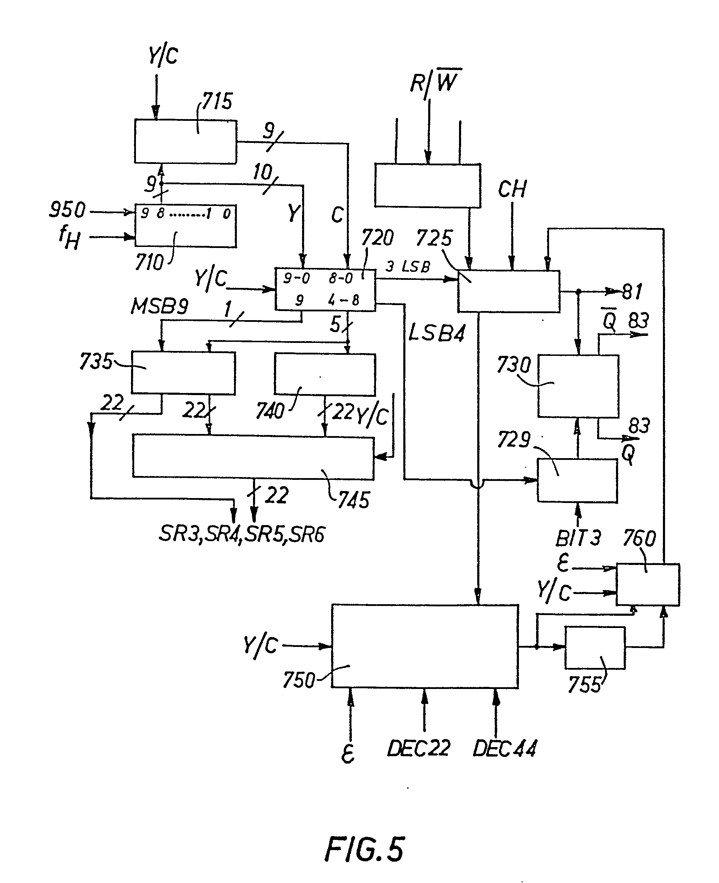

Le procédé MAC prévoit la transmission successive, pour chaque ligne de balayage, des composantes chrominance et luminance, un exemple de signal MAC étant représenté sur la fig. 5 du rapport cité. Dans le standard MAC, on transmet sur chaque ligne le signal de luminance Y et, alternativement, le signal de chrominance U (proportionnel à B–Y) sur les lignes impaires et V (proportionnel à R–Y) sur les lignes paires de l'images. Le principe de codage réside dans le multiplexage temporel des composantes, différence couleur (U ou V) et luminance (Y). Le signal bande de base, correspondant à ces composantes, respecte la norme CCIR 625 lignes et dure $51,85 \pm 0,3$ microsecondes. Le codage consiste précisément, dans l'exemple de la proposition UER de spécification pour le CCIR, à effectuer une compression temporelle d'un facteur 3 pour le signal différence couleur (appelé chrominance dans la suite du texte par souci de simplification et de brièveté) et d'un facteur 3/2 pour le signal luminance. Le décodage s'effectue, par exemple, au moyen de dispositifs utilisant des mémoires séries analogiques ou numériques et décrits dans la demande de brevet français FR-A 2 541 841 publiée le 31 août 1984.

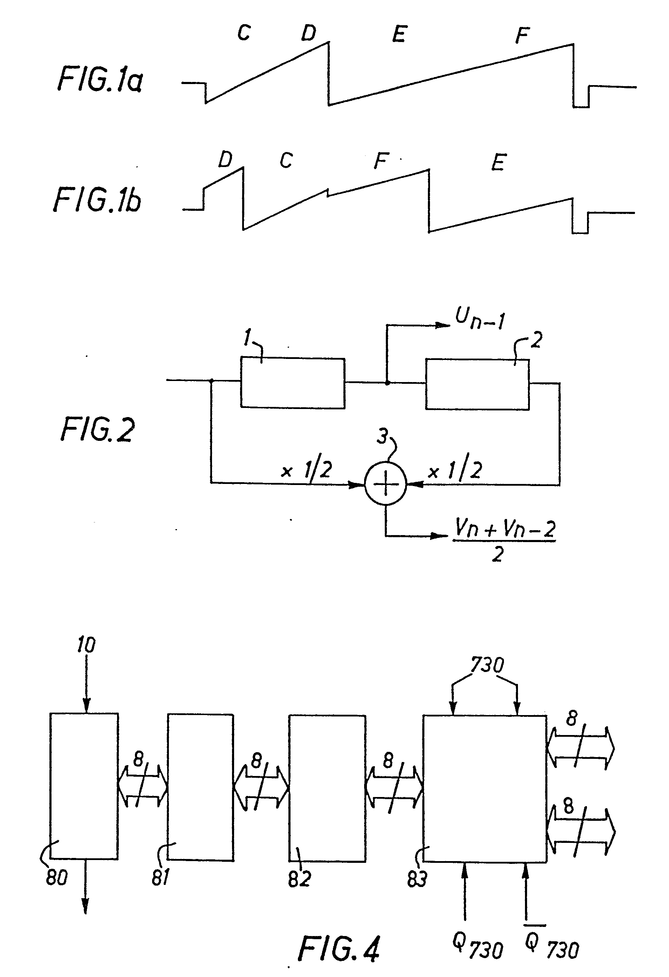

Le chiffrement du signal est obtenu en effectuant séparément sur chaque composante Y, U et V une opération de changement de l'ordre des points à partir d'une abscisse x qui varie à chaque ligne. Un exemple d'une telle opération consiste à effectuer une permutation circulaire de ces points à partir d'une abscisse x, comme décrit dans la demande de brevet français FR-A 2 533 099 publiée le 16 mars 1984 et qui concerne un procédé de brouillage d'images de télévision caractérisé, comme indiqué sur la fig. 1 de la présente demande en ce que les composantes analogiques de chrominance et de luminance sont, à l'émission, sur chaque ligne, l'une puis l'autre, chacune fractionnées en deux signaux consécutifs C et D d'une part et E et F d'autre part, dont le premier C ou E est alors retardé de la durée du second et le second D ou F avancé de la durée du premier, la période de référence qui précède la composante de chrominance étant exemptée de ce traitement, de même que l'intervalle en début de ligne réservé à la transmission de données et à la synchronisation numériques, et les positions $x_1$ et $x_2$ des points de fractionnement étant déduites d'une séquence numérique pseudoaléatoire.

Ce traitement est destiné à être appliqué en sens inverse à la réception pour la restitution simultanée des signaux de luminance Y et de différence de couleur U et V. En effet, les abonnés qui disposent de la clé de chiffrement peuvent déduire les abscisses x de cette clé et donc remettre en ordre les signaux ainsi brouillés. Les séquences numériques définissant les positions des points de fractionnement sont fournies, par exemple, par l'utilisation du générateur de séquence numérique pseudoaléatoire décrit dans la demande de brevet français FR-A 2 551 235 publiée le 1 mars 1985 ou par celle du circuit Data Encryption Unit de Intel.

Par ailleurs, le fait de transmettre alternativement les signaux de différence de couleur U et V rend indispensable l'utilisation de filtrages spatiaux à l'émission et à la réception afin de supprimer les défauts visuels (subjectifs) qui résultent de cette transmission séquentielle et qui sont produits par le recouvrement dans le domaine spatial des spectres des signaux échantillonnés.

La fig. 2 montre le filtre proposé à la réception, composé de deux lignes à retard 1 et 2 de retard égal à la durée d'une ligne et d'un additionneur 3 recevant l'entrée de la ligne 1 et la sortie de la ligne 2 après multiplication par un facteur 1/2 (l'indice n qui affecte les signaux U et V étant le numéro de ligne). Compte tenu du fait que, selon le document UER-SPB 284, ce filtre doit être de type transversal 1, 2, 1, le signal de chrominance U/V se trouve en retard d'une ligne par rapport au signal de luminance Y. Afin de minimiser la capacité de mémorisation nécessaire en réception il est proposé, dans l'actuel projet de standard MAC, de transmettre le signal de chrominance en avance d'une ligne sur le signal de luminance. Dans le cas où un seul générateur de séquence numérique pseudoaléatoire produisant des adresses de coupure en chrominance et luminance homothétiques (rapport 2 dans la durée des signaux comprimés) serait utilisé, l'adresse de coupure du signal de chrominance serait celle de la ligne courante alors que celle de la luminance serait celle de la ligne précédente. Ce chiffrement, s'il ne met en œuvre qu'un seul générateur de séquence pseudoaléatoire, nécessite alors la mémorisation de l'adresse pseudoaléatoire précédente.

Dès lors, si l'on utilise de façon classique, des mémoires à accès aléatoire (dites RAM d'après l'expression anglaise Random Access Memory) pour effectuer le décodage et le déchiffrement, il est nécessaire de multiplexer les adresses des cellules mémoires et de fournir des signaux dits de sélection de lignes et de colonnes (en anglais, raw address selection and column address selection signals). Ceci est dû au fait que, pour des questions de technologie et de coût, le nombre de broches d'interconnexion du circuit intégré RAM correspondant est limité. Pour réaliser le dispositif de déchiffrement, on se trouve donc contraint de réaliser des fonctions telles que le multiplexage des adresses dans des circuits extérieurs aux boîtiers mémoires, fonctions inutiles puisque l'accès à la cellule mémoire proprement dite nécessite alors le démultiplexage et le décodage de ces adresses. De même l'utilisation de plusieurs boîtiers mémoires nécessite la présence de circuits amplificateurs de courant (en anglais, «buffers») augmentant la complexité, le coût et la consommation de puissance du dispositif de déchiffrement et de décodage.

L'objet de la présente invention est de proposer un dispositif de déchiffrement et de décodage réunissant, au sein d'un même circuit intégré, les fonctions de déchiffrement, de décodage, d'adressage des cellules mémoires, de mémorisation, et éventuellement de conversion numérique-analogique.

L'invention concerne à cet effet un dispositif de déchiffrement et de décodage d'images de télévision brouillées à l'émission par application aux signaux vidéo de permutations circulaires, à partir d'adresses $x_i$ de points de coupure délivrées par un générateur d'adresses numériques pseudoaléatoires, caractérisé en ce que, lesdits signaux vidéo étant des composantes séparées telles que des composantes analogiques de type MAC, il comprend pour la remise en ordre des signaux permutés deux jeux de mémoires à accès aléatoire utilisés alternativement, le nombre $n_i$ de cellules de chaque mémoire étant égal à la longueur du signal utile à laquelle on applique la permutation circulaire, et en ce que le déchiffrement et le décodage sont réalisés pour chaque composante par une première phase d'écriture en mémoire obtenue par un saut d'adressage fonction de l'adresse dudit point de coupure, de façon que le signal chiffré soit inscrit en mémoire à la place qu'il occuperait s'il n'était pas chiffré, suivie d'une deuxième phase de lecture séquentielle de la mémoire assurant de plus l'expansion temporelle des signaux de différence de couleur U/V dits de chrominance et des signaux de luminance Y, ou bien, alternativement, caractérisé en ce que, lesdits signaux vidéo étant des composantes séparées telles que des composantes analogiques de type MAC, il comprend pour la remise en ordre des signaux permutés deux jeux de mémoires à accès aléatoire utilisés alternativement, le nombre $n_i$ de cellules de chaque mémoire étant égal à la longueur du signal utile à laquelle on applique la permutation circulaire, et en ce que le déchiffrement et le décodage sont réalisés pour chaque composante par une première phase d'écriture séquentielle en mémoire suivie d'une deuxième phase de lecture de la mémoire obtenue par saut d'adressage fonction de ladresse dudit point de coupure, de telle sorte que le signal chiffré soit lu en mémoire à la place qu'il occuperait s'il n'était pas chiffré, cette phase assurant simultanément l'expansion temporelle des signaux de différence de couleur U/V dits de chrominance et des signaux de luminance Y.

Dans l'un ou l'autre cas, l'association des fonctions adressage, déchiffrement, décodage et mémorisation au sein d'un même circuit intégré permet alors, compte tenu des densités d'intégration extrêmement importantes disponibles à ce jour, la conception d'un circuit intégré numérique.

Les particularités et avantages de l'invention apparaîtront maintenant de façon plus détaillée dans la description qui suit et dans les dessins annexés, donnés à titre d'exemples non limitatifs et dans lesquels:

- la fig. 1a montre le principe de codage de signaux vidéo selon le standard MAC, prévoyant la succession temporelle d'une composante de chrominance et d'une composante de luminance, et la fig. 1b le principe de brouillage proposé appliqué à ce standard MAC;
- la fig. 2 montre le circuit de filtrage du signal de chrominance à la réception;
- la fig. 3 composée des fig. 3a et 3b à considérer en association montre un exemple de dispositif de déchiffrement et de décodage selon l'invention;
- la fig. 4 montre la structure d'un des circuits bidirectionnels de traitement de la composante de luminance ou de la composante de chrominance;
- la fig. 5 montre la structure du circuit de décodage des adresses de coupure;
- la fig. 6 montre la structure d'un des circuits d'adressage;
- la fig. 7 met en évidence la partition des mémoires de luminance ou de chrominance en deux parties H et L respectivement haute et basse, et les fig. 8a et 8b montrent la position des octets sur le signal de luminance, respectivement avec et en l'absence de coupure et permutation du signal;
- les fig. 9a et 9b mettent en évidence pour deux lignes successives la fonction de post-filtrage et de restitution des composantes U et V réalisée par le dispositif de moyennage vertical et de permutation.

Trois caractéristiques importantes du signal MAC sont à souligner avant d'entrer dans la description plus détaillée de l'invention:

(a) des périodes de transition pendant la durée des composantes de chrominance et de luminance sont prévues de façon à assurer une réponse transitoire avec un minimum de suroscillations et de telle sorte que l'encombrement spectral du signal modulé en FM soit compatible avec la capacité d'un canal satellite (~27 MHz), ces transitions qui correspondent aux bords d'images étant réalisées par interpolation (la spécification propose actuellement une transition portant sur 3 points);

(b) afin de pallier l'imprécision de la référence de la phase de la fréquence d'échantillonnage à la réception due aux variations du temps de propagation de groupe d'un dispositif à l'autre (cette référence étant obtenue à partir de la voie données numériques), on introduit une redondance (après chiffrement) d'un certain nombre de points, 1 à n, c'est-à-dire que la même partie d'image se trouve transmise deux fois successivement;

(c) les points nécessaires à cette redondance sont pris dans la zone constituée par les points consécutifs résultant du voisinage artificiel fin à début d'image produits par la permutation des deux segments de la ligne, une interpolation d'ordre 0 par exemple étant alors prévue dans cette zone.

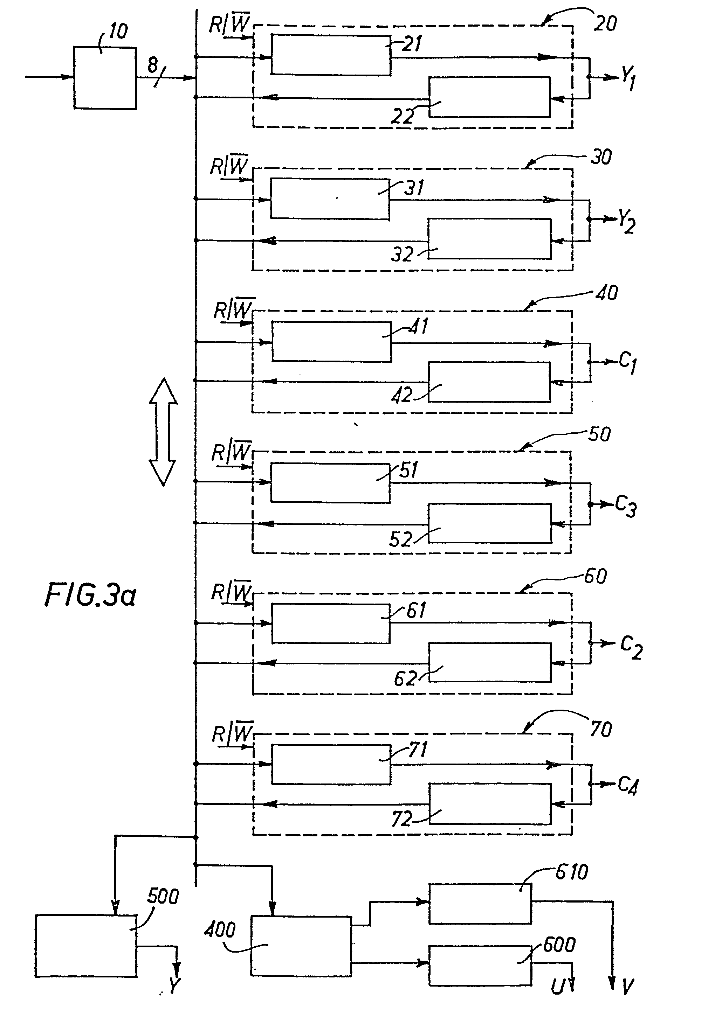

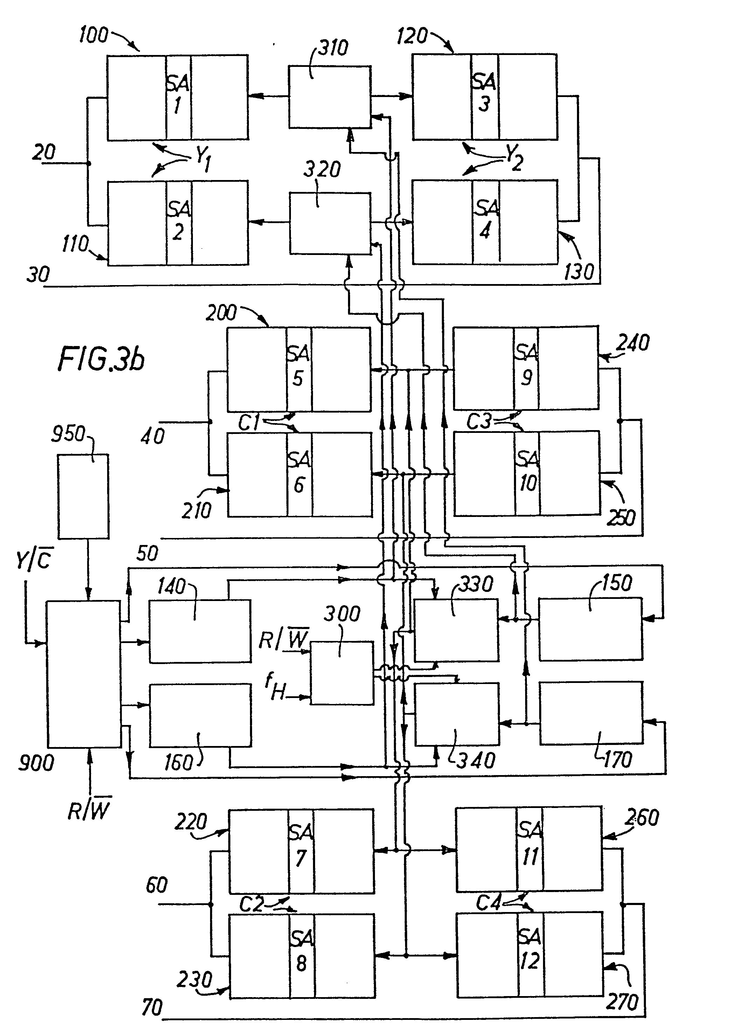

Ces rappels étant effectués, la fig. 3 composée des fig. 3a et 3b à considérer en association montre un exemple de dispositif à l'aide duquel le déchiffrement et le décodage sont possibles et qui comprend les éléments suivants:

(A) (1) un circuit d'entrée constitué d'un convertisseur analogique-numérique 10 qui reçoit les signaux MAC brouillés, limités en bande passante (8,4 MHz en MAC-C), et qui fournit ici 8 bits par exemple (le nombre de bits véhiculé par une connexion est symboliquement représenté sur les figures par un tiret placé transversalement à cette connexion et accompagné de l'indication de ce nombre);

(B) pour chaque poids issu du convertisseur 10 (si comme indiqué ci-dessus le convertisseur 10 fournit par exemple 8 bits, les circuits prévus en (2) à (5) dans ce paragraphe (B) sont à multiplier par huit):

(2) deux circuits 20 et 30 bidirectionnels de traitement de la composante de luminance comprenant chacun:

(a) un circuit de conversion des informations série en octets réordonnés (21 et 31 respectivement), assurant:

– un déchiffrement pendant la phase écriture en mémoire, à une vitesse compatible avec une technologie fonctionnant à vitesse modérée (environ 1,3 MHz);

– un tri des octets d'ordre pair et impair, en vue de leur écriture en mémoire basse et haute (ces mémoires basse et haute sont précisées ci-après);

(b) un registre de conversion parallèle-série (22 et 32 respectivement), assurant la remise en série des données issues de la lecture de la mémoire;

(3) quatre circuits bidirectionnels 40, 50, 60 et 70 de traitement de la composante de chrominance, identiques aux circuits 20 et 30;

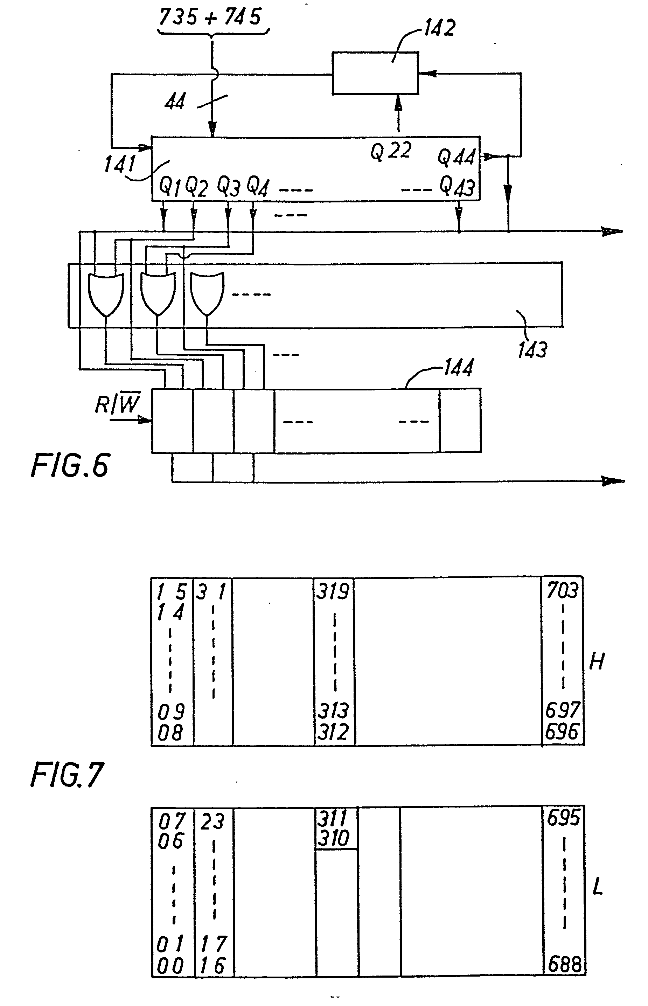

(4) deux mémoires RAM de luminance (100, 110) et (120, 130) dites $Y_1$ et $Y_2$, fonctionnant alternativement à la demi-fréquence ligne en écriture et recevant pendant l'intervalle luminance les signaux luminance sur 8 bits issus des circuits 21 et 31: ces mémoires sont composées chacune d'une partie haute H (100 et 120 respectivement), d'une partie basse L (110 et 130 respectivement) et d'amplificateurs de lecture SA1 à SA4, chaque mémoire haute ou basse étant composée de 2 fois 22 + 1 colonnes, la dernière colonne étant de façon classique la colonne dite de référence, et la totalité de la partie utile (hors référence) d'une de ces mémoires de luminance étant donc de $2 \times 2 \times 22 \times 8$ cellules mémoire, soit 704, et chaque mémoire $Y_1$ ou $Y_2$ reçoit en outre 44 fils d'adressage pour la partie haute, issus soit du circuit d'adressage écriture/lecture 140 soit du circuit d'adressage 150, par l'intermédiaire d'un circuit de permutation d'adresses 310, et 44 fils d'adressage pour la partie basse, issus de même soit du circuit d'adressage 160 soit du circuit d'adressage 170, par l'intermédiaire d'un circuit de permutation d'adresses 320, (ces circuits apparaissent plus loin dans la présente énumération, tandis qu'un exemple de partie haute H et de partie basse L de mémoire est représenté sur la fig. 7).

(5) quatre mémoires RAM de chrominance dites C1 (200, 210), C2 (220, 230), C3 (240, 250) et C4 (260, 270) recevant pendant l'intervalle de chrominance les signaux chrominance sur 8 bits et composées chacune, comme indiqué en (4) d'une partie haute, d'une partie basse et d'amplificateurs de lecture SA5 à SA12: chaque mémoire haute ou basse est composée de 2 fois 11 + 1 colonnes, la totalité de la partie utile d'une de ces mémoires de chrominance étant donc de $2 \times 2 \times 11 \times 8 = 352$ points, et chaque partie haute ou basse de chaque mémoire reçoit en outre 22 fils d'adressage issus respectivement des circuits 140/150 ou 160/170 par l'intermédiaire des circuits de permutation d'adresse 330 et 340 respectivement ainsi qu'un signal de commande lecture/écriture noté ici $R/\overline{W}$ issu de la base de temps (l'opération de déchiffrement-décodage, à strictement parler, ne nécessite la présence que de deux de ces mémoires seulement, mais la présence des deux mémoires de chrominance supplémentaires est rendue nécessaire en raison de la transmission séquentielle et du post-filtrage des signaux différence couleur, les fonctions de ces quatre mémoires étant permutées à l'aide des circuits de permutation 310 et 320 à chaque ligne: en effet, comme décrit ci-après, on inscrit, par exemple, dans la mémoire C1 alors qu'on lit les mémoires C2, C3, C4 pendant la ligne n, puis, à la ligne suivante, c'est dans C2 que l'on écrira alors que ce sont C3, C4, C1 qui seront lues, et ainsi de suite; on a préféré dans le cadre de cette invention utiliser cette procédure, qui simplifie d'ailleurs la conception du circuit d'adressage de ces mémoires, plutôt que celle, classique, qui consisterait à écrire et lire successivement dans deux mémoires C1, C2 en permutant leur fonction et à utiliser deux mémoires C3 et C4 pour réaliser le moyennage et la permutation);

(C) des circuits complémentaires consistant en:

(6) les quatre circuits d'adressage identiques 140, 150, 160, 170 assurant la fonction écriture ou lecture des mémoires de luminance Y et de chrominance C: en écriture, le même circuit, par exemple 140, est utilisé successivement pour l'écriture de C puis celle de Y, et en lecture, le même circuit, 150 par exemple, assure la lecture simultanée de C et de Y;

(7) un circuit de sélection et de permutation 300 de la mémoire chrominance dans laquelle on écrit et des trois mémoires de chrominance dans lesquelles on lit, et les circuits de permutation d'adresse 310, 320, 330, 340;

(8) un dispositif 400 de moyennage vertical et de permutation des signaux différence couleur, actionné à 6,75 MHz et assurant aussi le post-filtrage et la restitution simultanée des signaux U et V;

(9) trois convertisseurs numériques-analogiques (en option, les sorties pouvant être analogiques):

(a) un premier convertisseur 500 pour l'information de luminance, actionné à 13,5 MHz et recevant alternativement, à la demi-fréquence ligne, les contenus de la mémoire Y1 puis celle de Y2;

(b) deux convertisseurs 600 et 610 pour les informations de différence couleur U et V, actionnés à 6,75 MHz et recevant alternativement, à la demi-fréquence ligne, les contenus des mémoires C1 et C2 par exemple, selon l'état de permutation du rôle des mémoires de chrominance à ce moment;

(10) un circuit 900 de décodage des adresses de coupure qui, à partir des informations issues d'un générateur de séquence pseudoaléatoire 950, fournit les adresses colonnes des mémoires de luminance et de chrominance Y et C et réordonne et oriente les octets de données vers les mémoires hautes ou basses, en phase écriture.

Comme indiqué au cours de cette énumération, le dispositif nécessite la présence d'un signal de commande écriture/lecture R/$\overline{W}$ et d'un signal indiquant la nature du signal à un instant donné (luminance et chrominance), mais ces signaux sont produits dans un autre dispositif (base de temps) ne faisant pas partie de l'invention et qui n'est donc pas représenté.

Le fonctionnement du dispositif ainsi composé est le suivant: le signal analogique MAC après filtrage est converti en un signal numérique par le convertisseur 10 à une fréquence d'échantillonnage de 20,25 MHz, ce convertisseur fournissant toutes les 49,4 ns environ un mot de 8 bits. Chaque bit de ce mot va ensuite être traité séparément conformément à ce qui est décrit ci-après, étant entendu que les circuits 20 à 70 de traitement de la luminance et de chrominance sont répétés autant de fois qu'il y a de bits, comme on l'a vu lors de la description de la fig. 3.

La fig. 4 représente plus en détail l'un des circuits bidirectionnels de traitement de la composante de luminance ou de la composante de chrominance dans lesquels les données issues de chaque sortie du convertisseur analogique-numérique 10 entrent en série, à un débit égal ici à 20,25 Mb/s (ces données entrent dans les circuits de traitement de la chrominance C ou de la luminance Y selon qu'il s'agit temporellement de l'un ou l'autre de ces signaux). Ces circuits de traitement effectuent une conversion série-parallèle des données, de façon à réduire la vitesse d'écriture ou de lecture en mémoire et obtenir une compatibilité avec les technologies existantes, à grande densité d'intégration. Huit bits successifs sont convertis en un octet par sérialisation au moyen du registre à décalage 80, puis mémorisation pendant huit durées de bits (dites 8 temps bit) au moyen de la mémoire 8 bits 81 (en anglais, latch). Chaque octet va alors être mémorisé dans la mémoire RAM C ou Y à la place qu'il occuperait s'il n'était pas chiffré, place résultant d'un découpage séquentiel de la ligne en octets. La lecture séquentielle de la mémoire réalise alors l'expansion temporelle (il y a eu réciproquement, on l'a vu, compression temporelle lors du codage). Le réarrangement des données est effectué successivement pour la chrominance puis pour la luminance. Le réarrangement obtenu par le contrôle de la fonction mémorisation de la mémoire 81 est effectué à partir de l'adresse fournie par le générateur de séquence pseudoaléatoire 950. La mémoire 81 est suivie d'un circuit 82 à portes d'inhibition précédant à son tour un multiplexeur-démultiplexeur 83.

La fig. 5 montre de façon détaillée un exemple de réalisation du circuit 900 de décodage des adresses de coupure fournies par le générateur de séquences pseudoaléatoires. En effet, la sortie série de ce générateur de séquence pseudoaléatoire peut fournir 256 adresses de coupure par ligne de télévision à modifier, ces adresses ne devant par ailleurs pas être situées au voisinage des bords de l'image (adresse de coupure chrominance: $x_c = S + 64$, adresse de coupure luminance $x_y = 2S + 128$ par exemple). L'adresse de coupure fournie (sous forme série) est convertie en parallèle par un registre 710 actionné par la fréquence $f_H$ d'accompagnement des données. Du fait que l'adresse de coupure est différente pour les intervalles de chrominance et de luminance, le contenu de ce registre est mémorisé pendant une ligne dans une mémoire 715 à la fin de l'intervalle de chrominance. L'adresse courante est utilisée pour le réarrangement de la luminance, l'adresse mémorisée pour celui de la chrominance. Un multiplexeur 720 délivre pendant l'intervalle de chrominance l'adresse de coupure fournie par le registre à décalage 710, alors que pendant l'intervalle de luminance, il délivre l'adresse contenue dans la mémoire 715. Les trois bits de poids le plus faible (les bits de poids le plus faible sont appelés LSB) fournis par le multiplexeur 720 représentent le reste r (= 3 LSB) de l'adresse de coupure modulo 8 (exemple: si l'adresse de coupure pour la luminance Y est 310, le reste modulo 8 est égal à 6, soit 110 en binaire) et chargent un compteur 3 bits 725 fonctionnant à 20,25 MHz de fréquence d'horloge. Lorsque ce compteur atteint l'état 111, sa retenue commande la mémorisation du contenu du registre 80 dans la mémoire 81 (voir la fig. 4) et actionne un diviseur par deux 730. Le 4ème LSB (noté LSB4) de la sortie du multiplexeur 720 effectue la remise à zéro ou à un de ce diviseur 730 (si le 4ème LSB = 1, il y a remise à 1 du diviseur; si le 4ème LSB = 0, il y a remise à zéro du diviseur), par l'intermédiaire du multiplexeur 729. L'état de ce diviseur permet le rangement des octets soit dans la partie haute (Q = 1) soit dans la partie basse (Q = 0) de la mémoire RAM Y ou C. Le diviseur 730 commande à cet effet le multiplexeur-démultiplexeur 83 (voir la fig. 4), fonctionnant dans ce cas en démultiplexeur, pour orienter les octets d'ordre pair vers la partie basse de la mémoire et les octets d'ordre impair vers sa partie haute. Ce démultiplexage et ce découpage en parties haute et basse permettent de remédier aux problèmes de temps d'accès mémoires mis en jeu dans les technologies impliquées (NMOS). Cette solution, et c'est l'un des avantages de l'invention, permet d'obtenir une fréquence de récurrence apparente des colonnes mémoires de 8 temps bits, alors qu'une mémoire qui ne serait pas ainsi découpée supposerait que l'on passe d'une colonne (dernière ligne) à la suivante (première ligne) en moins d'un temps bit.

Pendant pratiquement tout le temps du cycle d'écriture en mémoire, le circuit 82 à portes d'inhibition est commandé de façon à être en mode de transfert (ou mode passant). Toutefois, lors de l'écriture du dernier octet de la ligne, l'écriture d'une partie de l'octet sera inhibée. Durant le cycle écriture, la commande du sens de fonctionnement de la mémoire 81 est en écriture (ce sens est le suivant: du registre vers le circuit d'inhibition). Chaque octet va être inscrit dans une colonne mémoire. L'une des particularités de l'invention est d'effectuer directement la sélection de la colonne, sans opération de démultiplexage d'adresse à partir d'un compteur d'adressage. L'adresse de cette colonne est obtenue par le décodage des bits fournis par le multiplexeur 720 au moyen d'un dispositif de décodage 735, et un multiplexeur 745 fournit les 44 bits de décodage de la coupure en luminance:

– adresse de chrominance:
– la sortie du multiplexeur 720 correspond aux 9 bits (LSB) issus de la mémoire 715: le décodage des bits 4, 5, 6, 7, 8 fournit la sélection de la colonne adéquate.
– adresse de luminance:

– la sortie du multiplexeur 720 correspond aux 10 bits issus du registre à décalage 710; le décodage des bits 4, 5, 6, 7, 8, 9 fournit la sélection de la colonne adéquate (exemple: adresse de coupure luminance $956 = 74 \times 8 + 4$, la colonne 38 va être sélectionnée, la partie d'octet sera écrite dans la partie basse de la mémoire; adresse de coupure chrominance $139 = 16 \times 8 + 11$, la colonne 9 va être sélectionnée, la partie de l'octet sera écrite dans la partie haute de la mémoire).

A partir de cette adresse de départ, le cycle d'adressage écriture est obtenu comme indiqué sur la fig. 6 par décalage circulaire dans un registre à décalage 141 rebouclé sur lui-même. Pour obtenir 44 adresses en luminance, on charge l'adresse de départ dans le registre 141, dont la 44ème sortie $Q_{44}$ du registre, à 44 cellules, est rebouclée sur l'entrée; pour que le même registre fonctionne en «chrominance» (22 adresses seulement), on opère de la même façon mais on boucle la 22ème sortie sur l'entrée du registre. Ces rebouclages sont effectués par l'intermédiaire du multiplexeur 142. Un exemple peut être donné (a = adresse):

$a_Y = 310 = 16 \times 19 + 6 \longrightarrow$ col. 20

soit $a_{départ}$: $\boxed{0 \mid 0 \mid 0 \mid \ldots \mid 1 \mid 0 \mid 0 \mid 0 \mid \quad \mid 0}$
col. 1   col. 20   col. 44

$a_C = 155 = 16 \times 9 + 11 \longrightarrow$ col. 10

soit $a_{départ}$: $\boxed{0 \mid 0 \mid 0 \mid \ldots \mid 1 \mid 0 \mid 0 \mid 0 \mid . \mid 0}$
col. 1   col. 10   col. 22

En luminance, les 44 sorties du registre 141 sont utilisées pour adresser la mémoire Y. Du fait qu'il y a deux mémoires Y fonctionnant en mode écriture ou lecture, composées chacune de deux parties de mémoire, il faut deux circuits d'adressage par mémoire Y, l'un pour la partie haute, l'autre pour la partie basse.

On décrira maintenant le fonctionnement du circuit d'adressage écriture-lecture, d'abord dans le cas de la luminance (c'est le cas représenté sur la fig. 6) puis dans celui de la chrominance, et dans chaque cas en écriture puis en lecture:
(A) cas de la luminance:
(1) écriture:
(a) les 44 adresses obtenues par le décodage de l'adresse de coupure a dans le circuit 735 (fig. 5) chargent les registres à décalage 141 du circuit d'adressage 140 et 161 du circuit d'adressage 160 (on suppose dans ce cas que la paire 140, 160 est utilisée en écriture, mais ce pourrait être tout aussi bien la paire 150, 170), et l'on sélectionne la même colonne en partie haute et basse.
(b) lors du chargement, en supposant que la partie d'octet soit à écrire dans la partie paire, l'adresse mémoire de la colonne définie par l'adresse a est donnée par le circuit de décodage 735. Puis, (8-r) périodes d'horloge bit après le début de la luminance, on écrit les (8-r) bits de l'octet en partie basse. L'horloge du registre 141 est la sortie $Q$ du diviseur 730 et celle du registre 161, la sortie $\overline{Q}$ de ce même diviseur.
(c) au début du deuxième octet, la sortie $Q$ du diviseur 730 actionne le registre 141 et sélectionne la colonne suivante $a + 1$ alors que l'on est en train d'écrire le deuxième octet dans la même colonne que le premier mais dans la partie haute. A l'octet suivant, la sortie $\overline{Q}$ de 730 actionne le registre 161 alors que l'on écrit le 3ème octet à l'adresse $a + 1$ dans la partie basse, etc.
(d) quand on sélectionne la dernière colonne, plusieurs cas se présentent selon la valeur du recouvrement $\varepsilon$ (en anglais, overlap): le nombre de points à mettre en mémoire peut être par exemple de 700 ($\varepsilon = 3$), 701 ($\varepsilon = 2$), 702 ($\varepsilon = 1$), 703 ($\varepsilon = 0$). La capacité de la mémoire étant de 704 points, il importe de décoder le nombre de points déjà inscrits (état du compteur 725 et de la colonne 44, DEC 44) et de remettre à zéro sur ce décodage le compteur 725 afin d'inscrire en 1ère colonne l'octet suivant. C'est le rôle du circuit 750, le multiplexeur 760 connectant alors directement ce circuit au compteur 725. Juste avant ce décodage, le registre 141 se trouve dans l'état:

| 0 | 0 | 0 | ... | 1 |
|---|---|---|---|---|
| col. 1 | | | | col. 44 |

et, juste après, dans l'état:

| 1 | 0 | 0 | 0 | | 0 |
|---|---|---|---|---|---|
| col. 1 | | | | | col. 44 |

(e) on continue ainsi jusqu'à atteindre l'adresse de départ, ce qui correspond à la fin de la fenêtre de luminance. Les 3 LSB du multiplexeur 720 inhibent alors l'écriture en mémoire (circuit 82 de la fig. 4).

On peut donner un exemple (a = adresse): $a_y$ = 310. Juste avant l'intervalle de luminance, on sélectionne la colonne 20. On charge les registres 141 et 161 avec le contenu:

| 0 | 0 | .. | 1 | 0 | 0 | .. | 0 |
|---|---|---|---|---|---|---|---|
| col. 1 | | col. 20 | | | col. 44 | | |

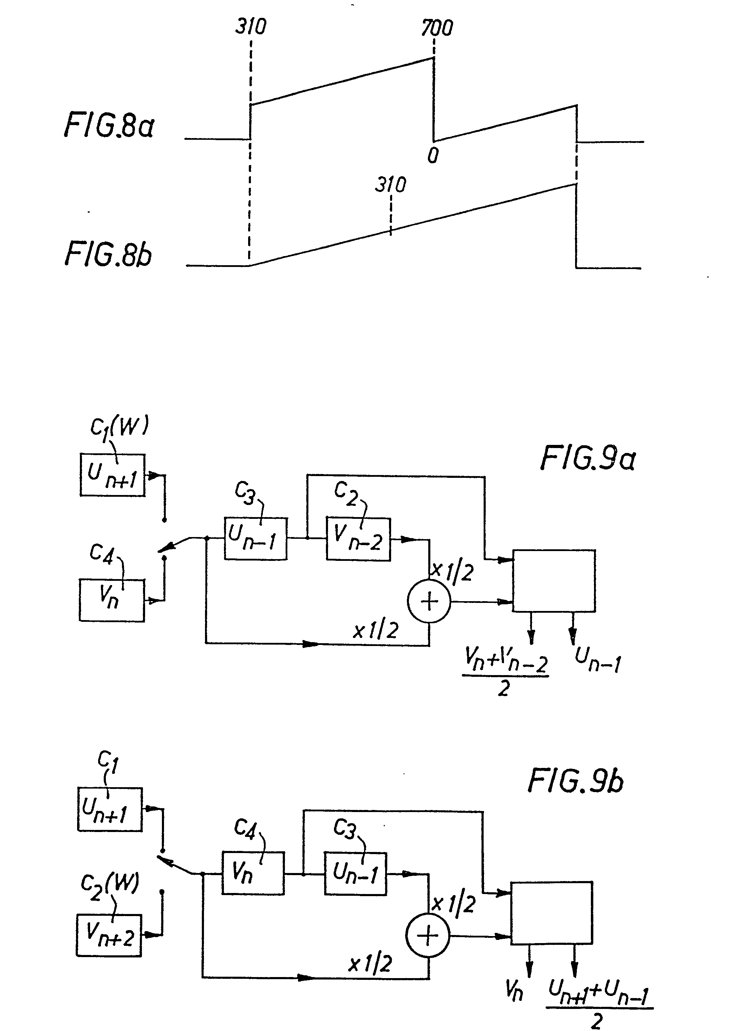

Le reste vaut 6 soit 110. Le compteur 725 est chargé (entrée CH) avec cette valeur. Deux temps bits après, ce compteur 725 atteint 111 et commande la mémorisation de ces deux bits (2 derniers bits du 1er octet mémoire), la mise à zéro du diviseur 730 et l'écriture de ces deux bits dans la partie basse de la mémoire. L'horloge Q du diviseur actionne le registre 141 qui sélectionne l'adresse colonne suivante, et 8 temps bit après, on écrit dans la partie haute de la mémoire l'octet suivant (voir la fig. 7 montrant les parties haute H et basse L de la mémoire, les fig. 8a et 8b montrant la position des octets sur le signal de luminance respectivement avec et en l'absence de coupure et permutation du signal).

(2) lecture:

(a) si l'on suppose que l'on veut lire la mémoire $Y_2$ avec les circuits d'adressage 150 et 170, il faut de la même façon un circuit d'adressage 150 pour la partie haute et un circuit d'adressage 170 pour la partie basse. En début de ligne on charge les registres 151 et 171 avec le contenu suivant:

| 1 | 0 | 0 | | 0 |
|---|---|---|---|---|
| col. 1 | | col. 44 | | |

151 étant commandé en décalage par l'horloge par la sortie Q du diviseur 730 et 171 par $\bar{Q}$. On lit alors de façon séquentielle: 1er octet, mémoire basse, 1ère colonne/sélection (décalage) 2ème colonne partie basse/lecture; 2ème octet, mémoire haute, 1ère colonne/sélection 2ème colonne partie haute/lecture; 3ème octet, mémoire basse, 2ème colonne/sélection 3ème colonne partie basse/lecture; 4ème octet, mémoire haute, 2ème colonne ..., etc.

(b) la fréquence de fonctionnement du compteur 725 est de 13,5 MHz, permettant d'assurer l'expansion temporelle de la luminance. Les octets issus des mémoires RAM 120 et 130 sont alors multiplexés par le multiplexeur-démultiplexeur 83, transitent par les portes d'inhibition 82 et la mémoire 81 et sont sérialisés par le registre parallèle-série 80 (débit 13,5 Mb/s).

(c) les adresses de colonne issues des circuits d'adressage 140 et 150 des parties hautes (et de même pour la partie basse avec les circuits 160 et 170) sont permutées à la demi-fréquence ligne par les circuits de permutation d'adresses 310 et 320 puisqu'une ligne sur 2, le circuit 140 (160) doit adresser la partie haute (basse) de la RAM Y1 en écriture alors que le circuit 150 (170) adresse la partie haute de la RAM Y2 en lecture, et réciproquement lors de la ligne suivante (voir le tableau 1 présenté ci-dessous –1a + 1b–).

Tableau 1a

| N° de la ligne | Etat compteur ligne | Circuits d'adressage selon mémoires | | | |
|---|---|---|---|---|---|
| | | C1 | C2 | C3 | C4 |
| n–2 | 0 0 | 140/160 | | | |
| n–1 | 0 1 | 140/160 | 150/170 | | |
| n | 1 0 | 150/170 | 150/170 | 140/160 | |
| n + 1 | 1 1 | 140/160 | 140/160 | 140/160 | 150/170 |
| n + 2 | 0 0 | 140/160 | 150/170 | 150/170 | 150/170 |
| n + 3 | 0 1 | 140/160 | 150/170 | 140/160 | 140/160 |
| n + 4 | 1 0 | 150/170 | 150/170 | 140/160 | 150/170 |
| n + 5 | 1 1 | 140/160 | 140/160 | 140/160 | 150/170 |
| n + 6 | 0 0 | 140/160 | 150/170 | 150/170 | 150/170 |
| n + 7 | 0 1 | 140/160 | 150/170 | 140/160 | 140/160 |
| n + 8 | 1 0 | 150/170 | 150/170 | 140/160 | 150/170 |

Tableau 1b

| N° de la ligne | | Ecriture (E) | Lecture (L) | Mode de fonctionnement des circuits 140 à 170 |
|---|---|---|---|---|
| n–2 | $U_{n-3}Y_{n-2}$ | C1 Y1 | | E L |
| n–1 | $V_{n-2}Y_{n-1}$ | C2 Y2 | C1      Y1 | L E |
| n | $U_{n-1}Y_n$ | C3 Y1 | C2 C1      Y2 | E L |
| n + 1 | $V_n\ Y_{n+1}$ | C4 Y2 | C1 C2 C3 Y1 | L E |
| n + 2 | $U_{n+1}Y_{n+2}$ | C1 Y1 | C2 C3 C4 Y2 | E L |
| n + 3 | $V_{n+2}Y_{n+3}$ | C2 Y2 | C3 C4 C1 Y1 | L E |
| n + 4 | $U_{n+3}Y_{n+4}$ | C3 Y1 | C4 C1 C2 Y2 | E L |
| n + 5 | $V_{n+4}Y_{n+5}$ | C4 Y2 | C1 C2 C3 Y1 | L E |
| n + 6 | $U_{n+5}Y_{n+6}$ | C1 Y1 | C2 C3 C4 Y2 | E L |
| n + 7 | $V_{n+6}Y_{n+7}$ | C2 Y2 | C3 C4 C1 Y1 | L E |
| n + 8 | $U_{n+7}Y_{n+8}$ | C3 Y1 | C4 C1 C2 Y2 | E L |

(B) cas de la chrominance: trois principes sont utilisés selon l'invention: (i) les circuits d'adressage précédemment décrits sont employés également pour l'adressage en écriture de la chrominance, et sont configurés différemment du mode luminance (ceci est possible puisque les signaux de luminance et de chrominance sont multiplexés temporellement); (ii) en lecture, le même circuit adresse à la fois luminance et chrominance; (iii) on effectue une permutation du rôle des mémoires de chrominance.

(1) écriture:

(a) en écriture, le fonctionnement est le même que précédemment en lecture, si ce n'est que, le nombre de colonnes mémoire étant de 22 au lieu de 44, on boucle, par le contrôle du multiplexeur 142, la 22ème sortie du registre 141 ou 161 sur l'entrée. Les 22 premières sorties sont fournis par le multiplexeur 144, la commande R/$\overline{W}$ étant en mode écriture (voir la fig. 6).

(b) le chargement des registres 141 et 161 se fait à partir du décodage de l'adresse de coupure par le dispositif 740 utilisant les bits 8, 7, 6, 5, 4 issus de la mémoire 715 et qui fournit ainsi 22 fils d'adresses. Le multiplexeur 745 fournit les 22 adresses colonne chrominance à ces registres. Le reste du fonctionnement est identique à celui nécessaire à l'écriture de la luminance. Toutefois, le nombre de points mémoire n'étant que de 352, plusieurs cas se présentent selon le nombre de points utiles de la partie ligne: 350 ($\varepsilon = 3$), 351 ($\varepsilon = 2$), 352 ($\varepsilon = 1$), 353 ($\varepsilon = 0$). Pour les trois premiers cas, on procède comme pour la luminance. Dans le dernier cas, on n'écrit pas le 353ème point (correspondant à la fin d'image): on décode 352 (col. 22, DEC 22, + état du compteur 725), on retarde cet état décodé avec une bascule D (755), le multiplexeur 760 commandé par la valeur de $\varepsilon$ laissant passer le signal issu de cette bascule 755, et on procède à la remise à zéro du compteur 725 (le 353ème point est donc perdu), l'initialisation de ce compteur étant autorisée par le circuit 750 qui permet l'écriture correcte dans les parties haute et basse des mémoires à partir du signal de recouvrement $\varepsilon$, des signaux DEC 22 et DEC 44 (qui indiquent que l'on écrit respectivement dans la colonne 22 des mémoires de chrominance et dans la colonne 44 des mémoires de luminance) et du signal Y/C.

(2) lecture: on réalise, à l'aide d'un circuit «ou logique» 143 (voir la fig. 6), l'addition des bits consécutifs tels que 1–2, 3–4, 5–6, ..., 21–22, 23–24, ..., 43–44. C'est là une particularité de l'invention, qui permet d'obtenir le rapport 2 dans les vitesses de lecture luminance-chrominance: pendant 2 temps bit luminance, on lit une même colonne chrominance. La lecture séquentielle de la luminance est donc simultanée de celle de la chrominance.

Comme indiqué précédemment, on réalise, selon l'une des particularités de l'invention, une permutation du rôle écriture/lecture des mémoires chrominance dans le but de simplifier l'adressage. Cette permutation est illustrée sur le tableau 1. Les deux colonnes de droite du tableau (partie 1b) indiquent si les circuits 140/160 ou 150/170 sont en mode écriture ou lecture. La deuxième colonne de gauche du tableau (partie 1a) indique quel est le registre qui réalise l'adressage de chaque mémoire. Cette indication est fournie par le décodage de l'état d'un compteur ligne incorporé dans le sélecteur 300 et utilisé par les circuits de permutation d'adresse 330 et 340 contrôlant respectivement les parties hautes et basses des mémoires C1, C2, C3, C4.

Si l'on ne procède pas de cette façon, qui constitue un avantage spécifique de l'invention, on peut écrire et lire, par exemple, alternativement dans les mémoires C1 et C2 et utiliser les mémoires C3 et C4 comme circuits de retard pour réaliser le post-filtrage. Il est alors nécessaire de disposer de circuits d'adressage particuliers pour ces deux dernières mémoires, augmentant ainsi la complexité et les dimensions du circuit.

On donne enfin, ci-dessous, la description de la fonction post-filtrage et restitution des composantes U et V. Cette fonction, réalisée par le dispositif 400 de moyennage vertical et de permutation des signaux différence couleur, est décrite sur les fig. 9a et 9b et selon la notation du tableau 1. La fonction moyennage est réalisée à chaque ligne mais concerne soit U, soit V, c'est-à-dire qu'au lieu de répéter comme en SECAM le signal U ou V de la ligne précédente pour le signal U ou V manquant, on réalise une ligne sur deux l'interpolation de la ligne manquante à partir des lignes consécutives. On obtient ainsi, à titre d'exemple, le cycle suivant pour U et V:

$$- \text{ligne } n + 2 \quad U_{n-1}, \frac{V_n + V_{n-2}}{2}$$

$$- \text{ligne } n + 3 \quad \frac{U_{n-1} + U_{n+1}}{2}, V_n$$

$$- \text{ligne } n + 4 \quad U_{n+1}, \frac{V_n + V_{n+2}}{2}$$

$$- \text{ligne } n + 5 \quad \frac{U_{n+1} + U_{n+3}}{2}, V_{n+2}$$

Les fig. 9a et 9b mettent bien en évidence, pour chaque mémoire de chrominance, la fonction assurée, le signal concerné, ainsi que le numéro de ligne correspondant, la fig. 9a correspondant par exemple à la ligne n + 2 et la fig. 9b à la ligne n + 3, et celle des mémoires qui est en mode écriture étant signalée par la lettre W entre parenthèses, les autres mémoires étant alors en mode lecture.

## Revendications

1. Dispositif numérique de décodage d'images de télévision éventuellement brouillées à l'émission par application aux signaux vidéo numérisés de permutations circulaires, à partir d'adresses $x_i$ de points de coupure délivrées par un générateur d'adresses numériques pseudoaléatoires, lesdits signaux vidéo étant des composantes séparées telles que des composantes analogiques de type MAC, ledit dispositif comprenant pour la remise en ordre des signaux permutés deux jeux de mémoires à accès aléatoire utilisés alternativement, le nombre $n_1$ de cellule de chaque mémoire étant égal à la longueur du signal utile à laquelle on applique la permutation circulaire, caractérisé en ce qu'il comprend:

(I) en sortie d'un convertisseur analogique-numérique qui reçoit les signaux MAC brouillés, pour chaque poids issu de ce convertisseur, deux circuits bidirectionnels de traitement de la composante de luminance et quatre circuits bidirectionnels de traitement de la composante de chrominance, comprenant chacun:

(a) un circuit de conversion des informations série en octets réordonnés, prévu pour assurer le déchiffrement pendant la phase écriture en mémoire puis un tri des mots d'ordre pair et impair et de longueur L en vue de leur écriture respective en mémoire, de telle sorte que la fréquence d'accès aux colonnes mémoires soit égale à la fréquence d'échantillonnage $F_S$ de la conversion analogique-numérique divisée par la longueur de deux mots 2L exprimée en bits.

(b) un registre de conversion parallèle-série, pour la remise en série des données issues de la lecture de la mémoire;

(II) deux mémoires de luminance dites Y1 et Y2 recevant pendant l'intervalle de luminance les signaux de luminance issus des circuits de conversion et quatre mémoires de chrominance dites C1, C2, C3 et C4 recevant pendant l'intervalle de chrominance les signaux de chrominance, ces mémoires étant composées chacune d'une partie haute, d'une partie basse et d'amplificateurs de lecture, et chaque mémoire recevant en outre des fils d'adressage pour la partie haute, provenant d'un circuit de permutation d'adresse et issus d'un circuit d'adressage pour la partie basse, provenant de même d'un circuit de permutation d'adresse et issus de même d'un circuit d'adressage écriture/lecture, ainsi qu'un signal de commande lecture/écriture issu de la base de temps, les quatre circuits d'adressage écriture/lecture, assurant la fonction écriture ou lecture des parties hautes et basses des mémoires;

(III) un circuit de décodage des adresses de coupure qui, à partir des informations issues d'un générateur de séquence pseudoaléatoire, fournit les adresses colonnes des mémoires Y1, Y2, C1, C2, C3, C4 et réordonne et oriente les octets de données vers les mémoires hautes ou basses, en phase écriture.

2. Dispositif selon la revendication 1, caractérisé en ce qu'il comprend un circuit de sélection et de permutation de la mémoire de chrominance dans laquelle on écrit et des mémoires de chrominance dans lesquelles on lit.

3. Dispositif selon l'une des revendications 1 et 2, caractérisé en ce qu'il est réalisé en circuit intégré avec:

(a) un premier convertisseur pour l'information de luminance, actionné à la fréquence $F_S/k$, où $F_S$ est la fréquence d'échantillonnage du signal vidéo et k le facteur de compression de la luminance, et recevant alternativement, à la demi-fréquence ligne, les contenus de la première mémoire de luminance Y1 puis celle de la seconde mémoire de luminance Y2;

(b) deux convertisseurs pour les informations de différence couleur U et V, actionnés à $F_S/l$, où l est le facteur de compression de la chrominance, et recevant alternativement à la demi-fréquence ligne chacun le contenu d'une des mémoires de chrominance, avant ou après moyennage.

4. Dispositif selon la revendication 3, caractérisé en ce que la mémoire haute ou basse de chaque mémoire de luminance est composée de $(2N+1)$ colonnes, la dernière colonne étant la colonne dite de référence, N étant tel que 2NL où L est la longueur des mots est égal ou immédiatement supérieur au nombre de points de luminance, et chaque partie haute ou basse de ces mémoires de luminance recevant 2N fils d'adressage, et en ce que la mémoire haute ou basse de chaque mémoire de chrominance est composée de $(2N'+1)$ colonnes, N' étant tel que 2N'L est égal ou immédiatement supérieur au nombre de points de chrominance, et chaque partie haute ou basse de ces mémoires de chrominance recevant 2N' fils d'adressage.

5. Dispositif selon la revendication 4, caractérisé en ce que, parmi les quatre mémoires pour la composante de chrominance, l'une est inscrite alors que les trois autres sont lues, le rôle respectif de lecture et d'écriture de chacune des mémoires étant permuté circulairement de ligne à ligne, la fréquence de récurrence d'inscription dans une même mémoire de chrominance étant de 4 lignes.

6. Dispositif selon l'une des revendications 1 à 5, caractérisé en ce que le même circuit d'adressage est utilisé (a) pour les déchiffrements successifs en écriture du signal de chrominance puis du signal de luminance et (b) pour le décodage réalisé par la lecture simultanée (i) à une fréquence de $F_S/k$ des mémoires contenant le signal de luminance, et (ii), à une fréquence $F_S^U/l$ des mémoires contenant le signal de chrominance, $F_S$ étant la fréquence d'échantillonnage du signal codé, k étant le facteur de compression du signal de luminance et l le rapport de compression du signal de chrominance.

7. Dispositif selon la revendication 6, caractérisé en ce que le circuit d'adressage des mémoires de chrominance et de luminance comprend un registre à décalage circulaire réalisant directement l'adressage de la colonne mémoire.

8. Dispositif selon la revendication 6, caractérisé en ce que le circuit d'adressage des mémoires de chrominance et de luminance comprend un compteur associé à un circuit de décodage réalisant directement l'adressage de la colonne mémoire.

9. Dispositif selon l'une des revendications 2 à 8, caractérisé en ce que chaque mémoire utilisée pour le déchiffrement des signaux de chrominance et de luminance est divisée en une partie haute et une partie basse de telle sorte que la fréquence d'accès à la partie haute ou à la partie basse de deux colonnes mémoires successives, ou vice versa, soit égale à $F_S/L$, à chaque accès à la colonne mémoire n de la partie haute correspondant la sélection de la colonne n + 1 de la partie basse et réciproquement, selon un adressage en quinconce.

## Patentansprüche

1. Digitale Dekodieranordnung zum Dekodieren von Fernsehbildern, die beim Übertragen gegebenenfalls dadurch verschleiert sind, dass die digitalen Videosignale Kreispermutationen ausgesetzt werden, und zwar ausgehend von den Adressen $x_i$ von Schnittstellen, die von einem Generator zum Liefern pseudobeliebiger digitaler Adressen geliefert werden, wobei die genannten Videosignale separate Anteile sind, wie analoge Anteile vom Typ MAC, wobei die genannte Anordnung zum Neuordnen der permutierten Signale zwei Speichersätze mit beliebigem Zugriff aufweist, die wechselweise benutzt werden, wobei die Anzahl $n_1$ Zellen jedes Speichers der Länge des Nutzsignals, auf das die Kreispermutation angewandt wird, entspricht, dadurch gekennzeichnet, dass die Anordnung die folgenden Elemente aufweist:
(I) am Ausgang eines die verschleierten MAC-Signale erhaltenden Analog-Digital-Wandlers für jeden von diesem Wandler herrührenden Wert, zwei Zweiwegschaltungen zum Verarbeiten des Leuchtdichteanteils und vier Zweiwegschaltungen zum Verarbeiten des Farbartanteils, wobei diese Schaltungen je die folgenden Elemente aufweisen:
(a) eine Schaltungsanordnung zum Umwandeln der Reiheninformation in zwei neugeordnete Bytes, mit denen beabsichtigt wird, während der Speicherphase die Dekodierung zu gewährleisten, und danach eine Sortierung gerader und ungerader Wörter mit einer Länge L in bezug auf ihre betreffende Speicherung in dem Speicher, und zwar derart, dass die Zugrifffrequenz der Speicherspalten der Abtastfrequenz $F_S$ der Analog-Digital-Wandlung geteilt durch die Länge zweier in Bits ausgedrückter Wörter 2L entspricht,
(b) ein Parallel-Reihe-Umwandlungsregister zum seriellen Neuordnen der durch Auslesung des Speichers erhaltenen Daten,
(II) zwei Leuchtdichtespeicher Y1 und Y2, die während des Leuchtdichteintervalls die von den Wandlerschaltungen herrührenden Leuchtdichtesignale erhalten, sowie vier Farbartspeicher C1, C2, C3 und C4, die während des Farbartintervalls die Farbartsignale erhalten, wobei diese Speicher je durch einen hohen Teil, einen niedrigen Teil und durch Leseverstärker gebildet werden und wobei jeder Speicher ausserdem Adressenschlangen für den hohen Teil erhält, die aus einer Adressenpermutationsschaltung herrühren und abgegeben sind von einer Adressierschaltung für den niedrigen Teil, sowie Adressenschlangen für den niedrigen Teil, die aus einer Adressenpermutationsschaltung herrühren und abgegeben sind von einer Adressier-Schreib/Leseschaltung, sowie ein Lese-/Schreibsteuersignal, das von der Zeitbasis herrührt, wobei die vier Adressier-Schreib-/Leseschaltungen die Schreib- oder Lesefunktion der hohen und niedrigen Teile der Speicher gewährleisten,
(III) eine Dekodierschaltung zum Dekodieren der Adressen der Schnittstellen, die, ausgehend von Informationen, die von einem Generator zum Liefern einer pseudobeliebigen Folge herrühren, die Spaltenadressen der Speicher Y1, Y2, C1, C2, C3, C4 liefert und die Daten-Bytes neuordnet und sie in der Schreibphase den hohen oder niedrigen Speichern zuführt.

2. Schaltungsanordnung nach Anspruch 1, dadurch gekennzeichnet, dass sie eine Selektions- und Permutationsschaltung des Farbartspeichers aufweist, in dem das Einschreiben erfolgt, sowie der Farbartspeicher, die ausgelesen werden.

3. Schaltungsanordnung nach einem der Ansprüche 1 und 2, dadurch gekennzeichnet, dass diese als integrierte Schaltung ausgebildet ist mit:
(a) einem ersten Wandler zum Umwandeln der Leuchtdichteinformation, und zwar mit der Frequenz $F_S/k$, wobei $F_S$ die Abtastfrequenz des Videosignals und k der Leuchtdichtekompressionsfaktor ist und wobei dieser Wandler ausserdem mit der halben Horizontal-Frequenz wechselweise den Inhalt des ersten Leuchtdichtespeichers Y1 und danach den des zweiten Leuchtdichtespeichers Y2 erhält,
(b) zwei Wandlern zum Umwandeln der Farbdifferenzinformationen U und V mit der Frequenz $F_S/l$, wobei l der Farbartkompressionsfaktor ist und wobei diese Wandler vor oder nach der Mittelwertbildung ausserdem mit der halben Horizontal-Frequenz wechselweise je den Inhalt eines der Farbartspeicher erhalten.

4. Schaltungsanordnung nach Anspruch 3, dadurch gekennzeichnet, dass der hohe oder niedrige Speicher jedes Leuchtdichtespeichers aus (2N + 1) Spalten besteht, wobei die letzte Spalte die Bezugsspalte genannt wird, wobei N derart ist, dass 2NL, wobei L die Wortlänge ist, der Anzahl Leuchtdichtestellen entspricht oder direkt grösser ist, und jeder hohe oder niedrige Teil dieser Leuchtdichtespeicher 2N Adressenschlangen erhält und dass der hohe oder niedrige Speicher jedes Farbartspeichers aus (2N' + 1) Spalten besteht, wobei N' derart ist, dass 2N'L der Anzahl Farbartstellen entspricht oder direkt grösser ist, und jeder hohe oder niedrige Teil dieser Farbartspeicher 2N' Adressenschlangen erhält.

5. Schaltungsanordnung nach Anspruch 4, dadurch gekennzeichnet, dass von den vier Speichern für den Farbartanteil der eine eingeschrieben und die drei anderen ausgelesen werden, wobei die Lese- bzw. Schreibrolle jedes der Speicher zeilenweise kreispermutiert wird, wobei die Schreibwiederholungsfrequenz in ein und demselben Farbartspeicher 4 Zeilen beträgt.

6. Schaltungsanordnung nach einem der Ansprüche 1 bis 5, dadurch gekennzeichnet, dass ein und dieselbe Adressierschaltung für die folgenden Zwecke verwendet wird (a) für die jeweiligen Entschlüsselungsvorgänge beim Einschreiben des Farbartsignals und danach des Leuchtdichtesignals und (b) für den Dekodierungsvorgang durch das simultane Auslesen (i) mit einer Frequenz gleich $F_S/k$ der Speicher mit dem Leuchtdichtesignal und (ii) mit einer Frequenz gleich $F_S/l$ der Speicher mit dem Farbartsignal, wobei $F_S$ die Abtastfrequenz des kodierten Signals, k der Kompressionsfaktor des Leuchtdichtesignals und l das Kompressionsverhältnis des Farbartsignals ist.

7. Schaltungsanordnung nach Anspruch 6, dadurch gekennzeichnet, dass die Adressierschaltung der Farbart- und Leuchtdichtespeicher ein Umlaufschieberegister aufweisen, das unmittelbar die Adressierung der Speicherspalte durchführt.

8. Schaltungsanordnung nach Anspruch 6, dadurch gekennzeichnet, dass die Adressierschaltungen für die Farbart- und Leuchtdichtespeicher einen Zähler aufweisen, der mit einer Dekodierschaltung zusammenarbeitet, die unmittelbar die Adressierung der Speicherspalte durchführt.

9. Schaltungsanordnung nach einem der Ansprüche 2 bis 8, dadurch gekennzeichnet, dass jeder zum Entschlüsseln der Farbart- und Leuchtdichtesignale verwendete Speicher in einen hohen und niedrigen Teil aufgeteilt ist, und zwar derart, dass die Zugrifffrequenz des hohen Teils oder des niedrigen Teils der zwei aufeinanderfolgenden Speicherspalten oder umgekehrt, gleich $F_S/L$ ist, wobei jedem Zugriff zu der Speicherspalte n des hohen Teils die Wahl der Spalte n + 1 des niedrigen Teils entspricht und umgekehrt, und zwar entsprechend einer Adressierung in Fünfergruppen.

## Claims

1. A digital arrangement for decoding television pictures which were possibly scrambled at transmission by submitting the digital video signals to cyclic permutations, from the addresses $x_i$ of points of cut produced by a pseudo-random digital address generator, said video signals being separate components such as analog components of the MAC type, said arrangement comprising for recreating the permuted signals two sets of random access memories which are used alternately, the number $n_1$ of cells of each memory being equal to the length of the useful signal on which the cyclic permutation is effected, characterized in that it comprises:
(I) arranged at the output of an analog-to-digital converter receiving the scrambled MAC signals, for each value originating from this converter, two two-way circuits for processing the luminance component and four two-way circuits for processing the chrominance component each comprising:
(a) a circuit for converting the serial information in two re-arranged bytes, having for its object to ensure the decoding during the memory write phase and thereafter an array of even and odd words of a length L with a view to their respective memory writing operations, such that the access rate of the memory columns is equal to the sampling frequency $F_S$ of the analog-to-digital conversion divided by the length of two words 2L expressed in bits;
(b) a parallel-to-series conversion register for serially re-arranging the data obtained by reading the memory;
(II) two luminance memories Y1 and Y2 receiving during the luminance interval the luminance signals originating from the converter circuit and four chrominance memories C1, C2, C3 and C4 receiving the chrominance signals during the chrominance interval, these memories each being formed by a high portion, a low portion and read amplifiers, and each memory receiving moreover addressing wires for the high portion, provided by an address permuting circuit and originating from an addressing circuit for the low portion, which is likewise provided by an address permuting circuit and likewise originates from a write/read addressing circuit and also a read/write control signal originating from the time base, the four write/read addressing circuits ensuring the write or read function of the high and low portions of the memories;
(III) a circuit for decoding the adresses of the points of cut, which, from the information components supplied by a pseudo-random sequence generator, supplies the column addresses of the memories Y1, Y2, C1, C2, C3, C4 and re-arranges and directs the data bytes to the high or low memories, in the write phase.

2. An arrangement as claimed in claim 1, characterized in that it comprises a cirucit for selection and permutation of the chrominance memory in which writing is effected and the chrominance memories which are read.

3. An arrangement as claimed in one of the Claims 1 and 2, characterized in that it is in the form of an integrated circuit comprising:
(a) a first converter for converting the luminance information, energized at the frequency $F_S/k$ where $F_S$ is the sampling frequency of the video signal and k the luminance compression factor, and receiving alternately at half the line frequency the content of the first luminance memory Y1 and thereafter the content of the second luminance memory Y2;
(b) two converters for the colour difference information components U and V energized at $F_S/l$ where l is the chrominance compression factor, and each receiving alternately at half the line frequency the content of one of the chrominance memories, before or after averaging.

4. An arrangement as claimed in Claim 3, characterized in that the high or low portion of each luminance memory is constituted by (2n + 1) columns, the last column being a so-called reference column, N being such that 2NL, wherein L is the word length, is equal to or immediately higher than the number of the luminance points, and each high or low portion of these luminance memories receiving 2N addressing wires and in that the high or low portion of each chrominance memory is constituted by $(2N'+1)$ columns, $N'$ being such that $2N'L$ is equal to or immediately higher than the number of chrominance points, and each high or low portion of these chrominance memories receiving $2N'$ addressing wires.

5. An arrangement as claimed in Claim 4, characterized in that, of the four memories for the chrominance component one is written-in whilst the three others are being read, the respective read and write roles of each of these memories being cyclically permuted from line to line, the write repetition rate in the same chrominance memory being 4 lines.

6. An arrangement as claimed in one of the Claims 1 to 5, characterized in that the same addressing circuit is used (a) for sequentially deciphering during the writing operation the chrominance signal and thereafter the luminance signal and (b) for the decoding operation realised by simultaneously reading (i) at a rate of $F_S/k$ the memories containing the luminance signal, and (ii) at a rate $F_S/l$ the memories containing the chrominance signal, $F_S$ being the sampling rate of the encoded signal, k being the luminance signal compression factor and 1 being the chrominance signal compression ratio.

7. An arrangement as claimed in Claim 6, characterized in that the addressing circuits for the chrominance and luminance memories comprise a circulating shift register which directly effects the addressing of the memory column.

8. An arrangement as claimed in Claim 6, characterized in that the addressing circuit for the chrominance and luminance memories comprise a counter which is associated with a decoding circuit which directly effects the addressing of the memory column.

9. An arrangement as claimed in one of the Claims 2 to 8, characterized in that each memory used for deciphering the chrominance and luminance signals is divided into a high portion and into a low portion, in such manner that the rate at which the high portion or the low portion of the two successive memory columns, or vice versa are accessed, is equal to $F_S/L$, the selection of the column $N+1$ of the low portion corresponding to each access to the memory column n of the high portion and conversely in accordance with a quincuncial addressing.

*FIG.1a*

C    D    E    F

*FIG.1b*

D    C    F    E

*FIG.2*

$U_{n-1}$

1    2

3

$\times 1/2$    $\times 1/2$

$$\frac{V_n + V_{n-2}}{2}$$

10    730

80    81    82    83

8    8    8    8

8

$Q_{730}$    $\overline{Q}_{730}$

*FIG.4*

FIG.3a

FIG.3b

FIG.5

EP 0 158 383 B1

$735 + 745$

FIG.6

FIG.7

21

FIG.8a

FIG.8b

FIG.9a

$$C_1(W)$$

$$U_{n+1}$$

$$C_3 \qquad C_2$$

$$U_{n-1} \qquad V_{n-2}$$

$$C_4$$

$$V_n$$

$$\times 1/2$$

$$\times 1/2$$

$$\frac{V_n + V'_{n-2}}{2} \qquad U_{n-1}$$

FIG.9b

$$C_1$$

$$U_{n+1}$$

$$C_4 \qquad C_3$$

$$V_n \qquad U_{n-1}$$

$$C_2(W)$$

$$V_{n+2}$$

$$\times 1/2$$

$$\times 1/2$$

$$V_n \qquad \frac{U_{n+1} + U_{n-1}}{2}$$